# EUROPEAN PATENT SPECIFICATION

(11) **EP 2 837 952 B1**
(45) Date of publication and mention of the grant of the patent: **31.08.2016**
(21) Application number: 14184475.3
(22) Date of filing: 29.11.2010
(51) Int. Cl.: G01V 1/00, F42B 12/36, G01V 1/16, G01V 3/165

(54) **Unattended ground sensors**
Unbeaufsichtigte Bodensensoren und Netzwerk
Capteurs au sol automatiques et réseau

(43) Date of publication of application: 18.02.2015
(62) Divisional of application: 10382321.7
(73) Proprietor: The Boeing Company, Chicago, IL 60606-1596 (US)
(72) Inventor: Scarlatti, David, 28028 Madrid (ES); Esteban, David, 28043 Madrid (ES); Garcia, Javier, 28020 Madrid (ES)
(74) Representative: Boult Wade Tennant

(56) References cited:
- WO-A2-01/78025
- WO-A2-2005/072286
- Trident Systems Inc.: "White Papers - Trident's Family of Unattended Ground Sensors", Trident Systems Inc. , 7 July 2010 (2010-07-07), XP002651043, Retrieved from the Internet: URL:http://www.tridsys.com/white-unattende d-ground-sensors.htm [retrieved on 2010-07-07]

## Description

### FIELD OF THE INVENTION

The present invention relates to unattended ground sensors for detecting movement of a pedestrian or vehicle in a monitored area using seismic sensors. In particular, the present invention relates to a network of simple and inexpensive sensors that may be rapidly deployed, collected and redeployed.

### BACKGROUND TO THE INVENTION

Networks of unattended ground sensors have been developed to make use of wireless sensor networks for surveillance applications. For example, networks of unattended ground sensors may be used in wooded zones where surveillance using radar systems is not viable.

A network typically comprises battery-powered devices that use various sensors to monitor physical or environmental properties, such as temperature, seismic waves or magnetic fields. In this way, the ground sensors may detect movement of pedestrians and vehicles. The ground sensors send data over the wireless network to a base station that processes the data provided by each ground sensor.

To date, unattended ground sensors have been sophisticated, intelligent devices. Typically, each sensor will process data it receives to identify events corresponding to the passage of a pedestrian or vehicle. Further data processing may be performed by the ground sensor, such as discriminating between types of events (e.g. pedestrian, light vehicle, heavy vehicle, etc) and determining a position of the pedestrian or vehicle. As a result, each ground sensor is relatively expensive. In addition, the size of the ground sensors is relatively large and they are designed for long endurance in semi-permanent deployment. Thus, generally much effort is required to plan the deployment.

The sensors themselves are either merely dropped into position or placed on the ground, where their size makes them relatively easy to detect. Where covertness is required, a hole must be dug so that the ground sensor can be at least partially buried, or other effort must be made to camouflage the ground sensor such as locating it within bushes or piles of stones if the required site is fortunate enough to have such features. An example of such a sensor can be found in WO 01/78025.

### SUMMARY OF THE INVENTION

Against this background, and from a first aspect, the present invention resides in an unattended ground sensor comprising a seismic sensor, a transmitter, a controller and a power supply.

The seismic sensor is operable to detect seismic waves incident on the ground sensor and to generate seismic data therefrom. For example, the seismic sensor may provide an electrical signal with a quantity, such as voltage or current, that varies according to the strength of the seismic waves detected. The variation of the electrical signal will provide the data that corresponds to the detected seismic waves. The seismic sensor may be a geophone.

The controller is operable to receive signals from the seismic sensor corresponding to the seismic data. The signals may be received directly from the seismic sensor or they may be received indirectly. For example, the ground sensor may further comprise an analogue to digital converter to digitise the seismic data provided by the seismic sensor. One or more amplifiers may be provided to amplify the signal, and one or more filters may be provided to condition the signal provided by the seismic sensor. For example, a bandpass filter may be provided such that only frequencies known to contain data indicative of a passing pedestrian or vehicle are provided to the controller. In this way, noise or events caused by small animals passing nearby may be filtered out. Other forms of commonly employed signal conditioning will be apparent to those skilled in the art.

The controller may process the signal it receives that corresponds to the seismic data. For example, any of the signal conditioning steps like filtering and amplifying that were described above may be performed by the controller. The controller is operable to send signals to the transmitter for onward transmission. The signals include the signals that correspond to the seismic data, or are derived therefrom (e.g. after signal conditioning such as noise suppression). The signals may be passed directly or indirectly to the transmitter.

The transmitter is operable to transmit signals from the ground sensor wirelessly, including signals that are derived from the seismic data. The wireless transmission is likely to use electromagnetic radiation. The transmitter may transmit at radio frequencies, although other methods are possible such as microwave transmission. The transmission may be directional, for example towards the known location of a base station. The transmitter may include components for converting the signals provided by the controller into a form suitable for driving an antenna.

A power supply is arranged to provide power to the ground sensor. The power supply will provide power to at least the controller, and may also provide power to the transmitter and the seismic sensor.

In contrast to prior art systems, the present invention provides a small, simple and inexpensive ground sensor that may be used in a network of such sensors. The simplified design of the sensors allows rapid deployment, collection and subsequent redeployment. The lesser expense of the sensors means that loss of individual sensors, either through damage or by inadvertently being left behind, is tolerable.

The outer body of the ground sensor is shaped to make rapid deployment as easy as possible. In particular, the outer body is shaped to aid pushing the ground sensor into the ground. In this respect, the ground sensor is provided with an elongate outer body that is longer than it is wide. The seismic sensor, the controller and the power supply are housed within the elongate outer body. The transmitter may also be housed within the elongate outer body. The seismic sensor, the controller, the power supply, the transmitter (when present within the outer body) and any other components may be stacked one above the other, thus allowing a narrower, longer outer body. Preferably, the transmitter is located at the top of the stack, e.g. at the top of the outer body. Preferably, the seismic sensor is located at the bottom of the stack.

The outer body is conveniently provided with a narrowing base to help drive the ground sensor into the ground. The elongate outer body has a shape that tapers to an end. The end may take the form of a spike. The elongate outer body may taper to a point. Ribs may extend towards a point at the base of the ground sensor. For example, four ribs may extend around the ground sensor. Preferably the ribs are narrow to ease insertion into the ground. The ribs may extend from a base of a main body section of the outer body. This base may itself taper to a point. Thus, the ribs first penetrate the ground, and then the sloping surface of the base of the main section will push into the ground. Preferably, the main section of the body has a constant cross section. This cross section may be circular, such that the main section is cylindrical, and the base may be conical.

With this design, the ground sensors may be pushed easily into the ground. To ensure the ground sensor is inserted into the ground to a desired depth, the elongate body may be provided with a collar at an end of ground sensor remote from base. The collar presents a widened portion, preferably with a flat underside. Thus the collar will provide a stop that prevents the ground sensor being pushed too far into the ground. The transmitter may be positioned at the top of the ground sensor adjacent to the collar such that the transmitter is located above ground, provided with a suitable field of view for transmission (e.g. such that the transmission may radiate across the ground rather than be directed mostly upwards).

If the ground is soft enough, a person may simply push down on the top of the sensor and it will be driven into the ground. Where more force is required, this may be simply administered by standing on the sensor or by tapping the sensor into the ground using a mallet or the like. To aid insertion, the top may be provided with a flat upper surface. The outer body, and the top in particular, must be robust enough to withstand the physical insertion of the ground sensor into the ground, particularly bearing in mind this action will be repeated.

Preferably, the ground sensor has a top that is spaced from the collar so as to form an air gap to admit air into interior of elongate outer body. This allows for ventilation and cooling of the components within the ground sensor. The top may be supported above the collar by supports equally spaced around the collar. The height of the ground sensor from the collar upwards, i.e. the portion of the ground sensor exposed above ground when deployed, may have a low profile thereby increasing covertness. For example, this height may be made to be less than 30 mm, preferably less than 20 mm, with a height of 16 mm being particularly preferred.

Overall, the height of the ground sensor is preferably less than 200 mm, more preferably less than 150 mm and most preferably 148 mm. The height of the tapering end is preferably less than 100 mm, more preferably less than 65 mm, more preferably 60 mm or less, and most preferably 60 mm. The height of the main section of the outer body with constant cross section is preferably less than 100 mm, more preferably less than 80 mm and most preferably 76 mm. The width of the ground sensor at the collar is preferably less than 100 mm, more preferably less than 75 mm, most preferably less than 60 mm or 60 mm. The width of the constant cross section of the outer body is preferably less than 50 mm, more preferably 35 mm or less and most preferably 35 mm.

As is described more fully below, it is preferred that relatively dense networks are formed from simple, cheap unattended ground sensors. Consequently, each ground sensor need not have a large detection range, i.e. the area within which the passage of a pedestrian or vehicle may be detected. Seismic sensors having a sensitivity in the range of 10 to 20 V/m/s are preferred, the range 12 to 18 V/m/s being further preferred, and the range 14 to 16 V/m/s most preferred.

From a second aspect, the present invention resides in a network of unattended ground sensors and a base station. Each ground sensor comprises a seismic sensor, a transmitter and a controller. The seismic sensor is operable to detect seismic waves incident upon the ground sensor and to generate seismic data therefrom. The transmitter is operable to transmit wirelessly signals from the ground sensor to the base station. The controller is operable to receive signals from the seismic sensor corresponding to the seismic data and to send signals to the transmitter for onward transmission to the base station. The base station comprises a receiver operable to receive the signals transmitted by the ground sensors. The network of ground sensors is arranged with a spacing between adjacent ground sensors of no more than 30 m, no more than 20 m, no more than 15 m or no more than 10 m.

This arrangement provides a denser network of ground sensors. This may be advantageous where low cost sensors are being used. For example, each ground sensor may have a sensitivity in the range of 10 to 20 V/m/s, 12 to 18 V/m/s or 14 to 16 V/m/s. The network may comprise more than 25, 50, 100 or 250 ground sensors. This enables a less expensive network to be created with a greater number of low cost ground sensors. As well as reducing overall cost, this arrangement has a further benefit in providing a network with greater resolution due to the greater number of nodes. Moreover, better opportunities are provided in combining data produced from many more ground sensors, as will be described below.

From a third aspect, the present invention resides in a network of unattended ground sensors and a base station.

Each ground sensor comprises a seismic sensor, a transmitter and a controller. The seismic sensor is operable to detect seismic waves transmitted to the ground sensor and to generate seismic data therefrom. The transmitter is operable to transmit wirelessly signals from the ground sensor to the base station. The controller is operable to receive signals from the seismic sensor corresponding to the seismic data and to send signals corresponding to the seismic data to the transmitter for onward transmission to the base station.

The base station comprises a receiver and a processor. The receiver is operable to receive the signals corresponding to the seismic data transmitted by the ground sensors. The processor is operable to process the received signals corresponding to the seismic data and to identify events corresponding to the movement of a pedestrian or vehicle across the ground recorded by the ground sensor that provided the signal being processed.

This arrangement sees responsibility for processing and analysing the seismic data pushed to the base station, and not imposed upon the ground sensors. This simplifies the requirements for the ground sensors, thus allowing their cost to be reduced. Essentially, data corresponding to the seismic signals is sent from the ground sensors to the base station, where a processor performs the analysis. It is to be understood that the ground sensors may perform some manipulation of the seismic data, for example to reduce noise, to amplify the signal, or to select frequency bands of interest. In any event, the signal transmitted by the ground sensor still corresponds to the seismic signal recorded by the seismic sensor. No analysis has been performed at the ground sensor in the sense that no attempt has been made to determine whether an event corresponding to the movement of a pedestrian or vehicle has occurred.

Thus, the processor at the base station collects seismic data from the ground sensors. The processor may be operable to analyse the received signals to characterise the pedestrian or vehicle detected. Preferably, the processor performs analysis of the seismic data from the ground sensors in a comparative sense, as well as analysing the data from each ground sensor in isolation. For example, the data received may be fused, as is well known in the art. Comparative analysis may be used to verify the detection of events and/or to reduce the instances of false detections. Comparative analysis may be used track a pedestrian or vehicle.

Features of the networks of ground sensors according to the second and third aspects of the invention may be freely mixed and used in combination. Also, any of the networks described above may include one or more of the ground sensors according to the first aspect of the invention and as modified according to any of the optional features described above.

The present invention also extends to methods associated with any of the ground sensors and networks described above.

For example, the present invention extends to a method of manufacturing an unattended ground sensor by installing into an elongate outer body, having a shape that tapers to an end, a seismic sensor operable to detect seismic waves incident on the ground sensor and to generate seismic data therefrom, a transmitter operable to transmit wirelessly signals from the ground sensor, a controller operable to receive signals from the seismic sensor corresponding to the seismic data and to send signals to the transmitter for onward transmission, and a power supply arranged to provide power to the ground sensor.

The present invention also extends to a method of deploying an unattended ground sensor comprising a seismic sensor operable to detect seismic waves transmitted to the ground sensor and to generate seismic data therefrom, a transmitter operable to transmit wirelessly signals from the ground sensor, a controller operable to receive signals from the seismic sensor corresponding to the seismic data and to send signals to the transmitter for onward transmission, a power supply arranged to provide power to the ground sensor, and an elongate outer body within which the seismic sensor, the controller and the power supply are housed. The elongate outer body has a shape that tapers to an end. The method comprises pushing the ground sensor into the ground by exerting a force on the top of the ground sensor such that the tapered end of the ground sensor is driven into the ground.

The present invention also extends to a method of forming a network of unattended ground sensors and a base station. Each ground sensor comprises a seismic sensor operable to detect seismic waves transmitted to the ground sensor and to generate seismic data therefrom, a transmitter operable to transmit wirelessly signals from the ground sensor to the base station, and a controller operable to receive signals from the seismic sensor corresponding to the seismic data and to send signals to the transmitter for onward transmission to the base station. The base station comprises a receiver operable to receive the signals transmitted by the ground sensors. The method comprises installing the ground sensors with a spacing between adjacent ground sensors of no more than 30 m.

The present invention also extends to a method of operating a network of unattended ground sensors and a base station, the method comprising: detecting seismic waves incident on the ground sensors and generating seismic data therefrom; transmitting signals corresponding to the seismic data from the ground sensors to the base station; receiving at the base station the signals corresponding to the seismic data transmitted by the ground sensors; and processing the received signals corresponding to the seismic data to identify events corresponding to the movement of a pedestrian or vehicle across the ground recorded by the ground sensor that provided the signal being processed.

### BRIEF DESCRIPTION OF THE DRAWINGS

In order that the present invention may be more readily understood, preferred embodiments will now be described, by way of example only, with reference to the following drawings in which:
Figure 1 is a schematic representation of an unattended ground sensor according to an embodiment of the present invention;
Figure 2 is a schematic representation of an unattended ground sensor according to another embodiment of the present invention;
Figure 3 is a perspective view of an unattended ground sensor according to yet another embodiment of the present invention;
Figure 4 is a partial cut-away perspective view of the unattended ground sensor of Figure 3;
Figure 5 is a side view of the unattended ground sensor of Figure 3;
Figure 6 is a longitudinal section through the unattended ground sensor of Figure 3 when deployed in the field;
Figure 7 is a schematic representation of a network of unattended ground sensors like those of Figures 1 to 6;
Figure 8 is a schematic representation of another network of unattended ground sensors like those of Figures 1 to 6; and
Figure 9 is a schematic plan view of a part of a network of unattended ground sensors like those of Figures 1 to 6.

### DETAILED DESCRIPTION OF THE INVENTION

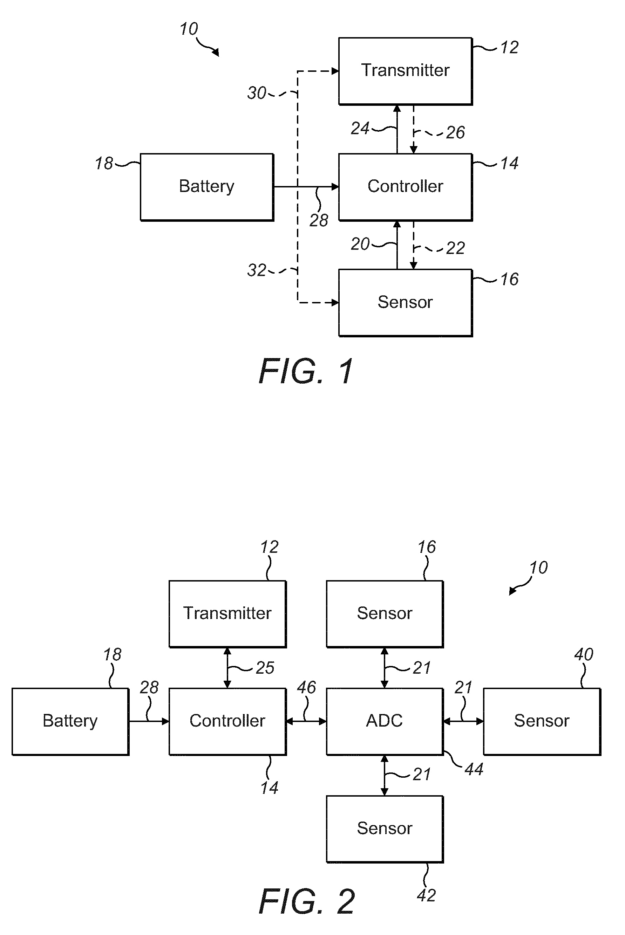

An unattended ground sensor 10 is shown schematically in Figure 1 such that the main components of the ground sensor 10 may be seen clearly. The ground sensor 10 comprises a transmitter 12, a controller 14 and a sensor 16. In this embodiment, sensor 16 is a seismic sensor 16 such as a geophone. The seismic sensor 16 detects vibrations transmitted to the ground sensor 10 when the ground sensor 10 is deployed in the field. The ground sensor 10 is driven into the ground. Any movement across the ground close to the ground sensor 10 will cause vibrations to travel through the ground. These seismic vibration impinging on the ground sensor 10 will be detected by the seismic sensor 16, for example the vibrations may be reproduced as a voltage output of the seismic sensor 16. A battery 18 provides power to the ground sensor 10.

The controller 14 manages operation of the ground sensor 10. The controller 14 receives signals from the seismic sensor 16, as shown by arrow 20. The signals may correspond to the voltage output of a geophone. In addition, controller 14 may send signals to the seismic sensor 16, as shown by arrow 22, for example to set the frequency with which the seismic sensor 16 collects data. The controller 16 processes the signal received from the seismic sensor 16. For example, the controller 16 may filter the signal to reduce noise, and/or may amplify the signal. The controller 14 may perform more sophisticated processing of the signal received from the seismic sensor 16, for example according to algorithms to discriminate between actual movements of people or vehicles as opposed to other ambient vibrations. However, in preferred embodiments, the ground sensor 10 is simple and a relatively unsophisticated controller 14 is used that provides just conditioning of the signal received from the seismic sensor 16.

The controller 14 passes signals to the transmitter 12, as shown by arrow 24, for onward transmission to a base station or the like. For example, the controller 24 may provide the signal from the seismic sensor 16, after conditioning, to the transmitter 12. The controller 14 may send signals whenever they are available for transmission, or may store data in memory such that batches of data may be sent periodically. The transmitter 12 may be a transceiver capable of receiving signals that are passed to the controller 14, as indicated by arrow 26. For example, diagnostic signals may be sent to the ground sensor 10 to elicit a response thereby indicating that the ground sensor 10 is functioning correctly.

The battery 18 provides power to the controller 14, as indicated by the arrow 28. The controller 14 may distribute power to the other components of the ground sensor 10 that require power, for example the transmitter 12 and/or the sensor 16. Alternatively, power may be supplied direct from the battery 18, as indicated by broken arrows 30 and 32. The battery 18 may be rechargeable, and may be recharged from a solar cell provided on the ground sensor 10. Other power sources may be used in place of the battery 18, for example a fuel cell.

The seismic sensor 16 may gather data continuously, or it may gather data periodically. How often the seismic sensor 16 gathers data may be set by the controller 14, and may vary. For example, the frequency may increase at certain times of day, or after receiving a signal indicating movement nearby. The seismic sensor 16 may gather data continuously, but the controller 14 may accept a signal from the seismic sensor 16 only when the signal varies above a threshold. This allows general background noise to be ignored, and data to be collected only when a larger amplitude signal arises that is more indicative of movement nearby.

Figure 2 shows an alternative embodiment of a ground sensor 10. This embodiment generally corresponds to the embodiment of Figure 1, and the optional features described above with respect to Figure 1 apply to the embodiment of Figure 2 also.

In the embodiment of Figure 2, the battery 18 supplies electricity directly to the controller 14. The controller 14 provides a regulated power supply to the remaining components of the ground sensor 10, as indicated by the double-headed arrows 21, 25 and 44. As noted above, the battery 18 may alternatively supply power directly to the other components of the ground sensor 10.

The transmitter 12 is a transceiver, although may be implemented to transmit alone.

The ground sensor 10 of Figure 2 is provide with three sensors 16, 40 and 42. A seismic sensor 16 like that of Figure 1 is included. In this embodiment, the ground sensor 10 further comprises a temperature sensor 40 and a magnetic field sensor 42. Either or both of these additional sensors 40,42 may be present in embodiments of the present invention. Temperature sensor 40 provides a signal that varies according to the ambient temperature, and the magnetic field sensor 40 provides a signal that varies with the sensed magnetic field. Variations in the temperature sensed and the magnetic field sensed may be indicative of a pedestrian or vehicle passing by the ground sensor 10.

In this embodiment, the seismic sensor 16, the temperature sensor 40 and the magnetic field sensor 42 produce analogue signals. These analogue signals are passed to an ADC as shown by the arrows labelled 21. ADC 44 is preferably a sixteen-bit ADC that digitises the signals provided by the three sensors 16, 40 and 42. The ADC 44 may provide further functionality, for example amplification and filtering. The ADC 44 provides the digitised signals from the three sensors 16, 40 and 42 to the controller 14, as shown by arrow 46. The signals may be passed in parallel or in series, for example after multiplexing. The controller 14 processes the digital signals received from the ADC 44, and sends the results to the transmitter 12 for onward transmission, as previously described.

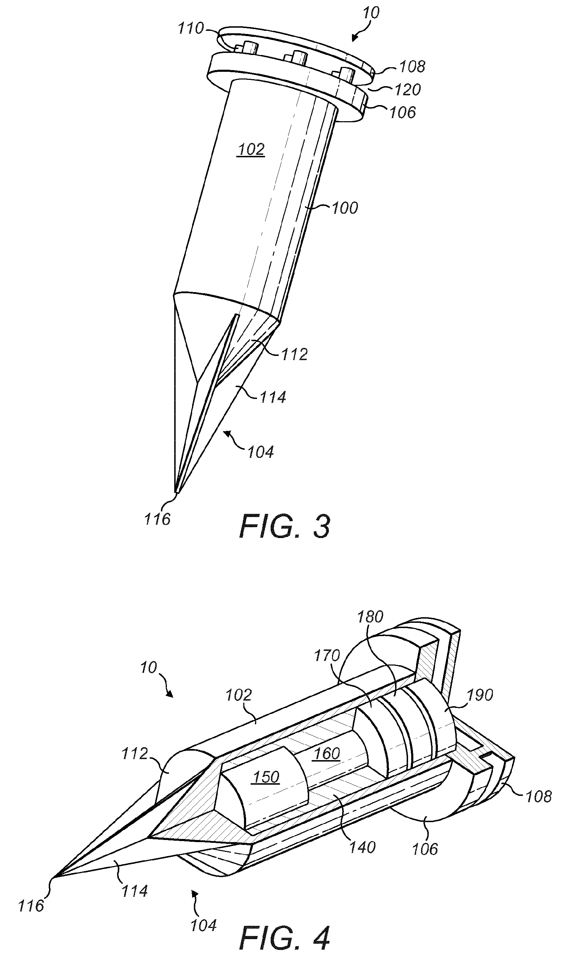

Figures 3 to 6 show another embodiment of an unattended ground sensor 10. The ground sensor 10 of Figures 3 to 6 may conform to the schematic representations of Figure 1 and 2, and to the accompanying description above.

As will be seen, the ground sensor has a generally elongate body 100 comprising a generally cylindrical main section 102 that extends between a pointed base 104 and a collar 106. The elongate body 100 is generally circular in cross-section. A cap 108 is supported above the collar 106 by six legs 110. The cap 108 is solid and provides protection for the components that are housed within the elongate body 100. An air passage 120 extends between the collar 106, cap 108 and legs 110 and communicates with an aperture 122 provided in the top of the collar 106 to allow air to pass into the interior of the elongate body 100.

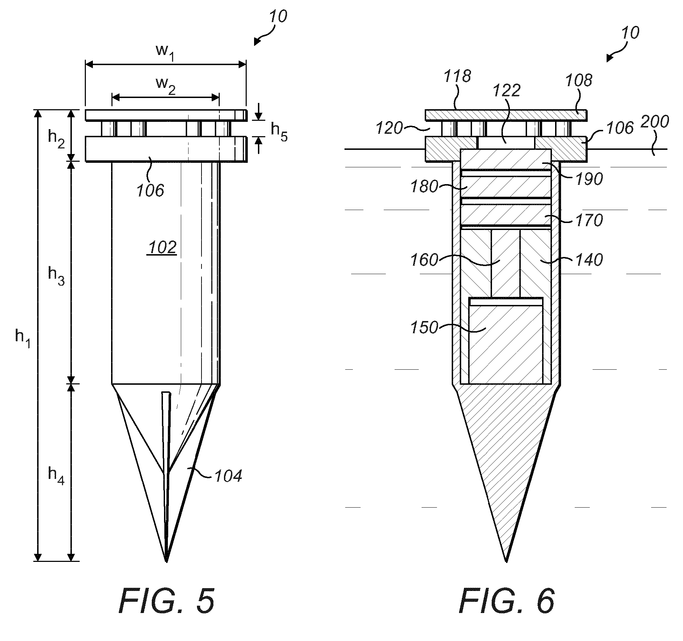

The pointed base 104 of the elongate body 100 comprises a conical part 112 and four ribs 114 that extend downwardly from the conical part 112 to meet at a sharp point 116. The pointed base 104 is provided to aid insertion of the ground sensor 10 into the ground 200, as shown best in Figure 6. The sharp point 116 may be placed onto the ground 200. The flat surface 118 provided on the top of the cap 108 allows weight to be exerted on the ground sensor 10 such that the point 116 penetrates the ground 200. The weight may be applied using a hand, foot or a tool such as a hammer. To this end, the elongate body 100 is constructed so as to be robust and not to break under such repeated action.

As the point 116 penetrates the ground 200, the ground 200 is pushed aside by the ribs 114 and the conical part 112 until a hole is formed in the ground 200 with sufficient size to provide clearance for the main section 102. The ground sensor 10 is driven into the ground 200 until the underside of the collar 106 makes contact with the top surface of the ground 200, as shown in Figure 6. As will be appreciated, the majority of the ground sensor 10 resides within the ground 200 and so will pick up seismic vibrations travelling through the ground 200. Only a small part of the ground sensor 10 projects above the ground 200, meaning that the ground sensor is well hidden and less likely to be discovered.

Figure 5 shows dimensions of this particular embodiment of the ground sensor 10. The ground sensor 10 has an overall height h₁ of 148 mm. The height h₂ of the ground sensor 10 above ground 200 is 16 mm, with the height h₅ of the air passage 120 being 5 mm. The main section 102 of the elongate body 100 has a height h₃ of 76 mm. The height h₄ of the pointed base 104 is 60 mm. The width w₁ of the ground sensor 10 at its widest point (the cap 108 and collar 106) is 50 mm. The main section 102 of the elongate body 100 has a width w₂ of 35 mm.

The elongate body 100 is provided with a hollow centre that houses several components. In contemplated embodiments, the internal diameter of the hollow centre of the elongate body 100 varies in accordance with the components' sizes. However, it is preferred not to form the elongate body 100 in this way, but instead to form the hollow centre of the main section 102 with a constant internal diameter. A shaped sleeve 140 is then inserted into the hollow centre of the elongate body 100. The sleeve 140 has an outer diameter that matches the internal diameter of the elongate body 100 to ensure a snug fit. The internal diameter of the sleeve 140 varies to match the sizes of the components. This is shown in Figures 4 and 6.

The elongate body 100 houses the components in a stack, one above the other. A geophone 150 is provided at the bottom of the stack. The geophone 150 is firmly supported by the sleeve 140, and the snug fit of the sleeve 140 within the elongate body 100 ensures strong coupling of seismic waves from the ground 200 to the geophone 150. The geophone 150 is small, having a diameter of 22.2 mm and a height of 25.4 mm. The geophone may be a type SM-7m miniature geophone, produced by Sensor Nederland b.v., Rouwkooplaan 8, 2251 AP Voorschoten, The Netherlands.

Above the geophone 150, there is a battery 160. A lithium ion battery 160 is preferred, with a battery life of 19 Ah or 1.2 Ah or any value in between. A 1.2 Ah battery has been found to produce a typical working life of 60 days. The battery 160 may have any of the following properties: a rated voltage of 1.8 to 3.6 V (3.6 V being preferred), a maximum recommended continuous current of 50 mA, a maximum pulse current of 100 mA, and an operating range of -55°C to +85°C. Such batteries are commonly available.

Above the battery 160 there is a controller board 170. The controller board 170 provides the controller 14 and may also provide the ADC 44. The controller board 170 may be any commonly available electronics circuit board, such as an application specific integrated circuit (ASIC) board. The functions that may be implemented by the controller board 170 have been described above. The controller 14 may operate at 16 MIPS throughput up to 16 MHz.

Above the controller board 170, a radio board 180 is sandwiched between the controller board 170 and an antenna 190. The radio board 180 converts the signals provided by the controller 14 into a form suitable for radio transmission, and provides this as a driving signal to the antenna 190. In this particular embodiment, a single board is used to replace both the controller board 170 and the radio board 180. An Atmel ATmega128RFA1 is used that is a single component based on the combination of an ATmega1281 microcontroller and an AT86RF231 radio transceiver. The component is available from Atmel Corporation, 2325 Orchard Parkway, San Jose, CA 95131, USA. In this embodiment, the antenna 190 is a 2 dBi chip antenna available from Fractus, Avda. Alcalde Barnils, 64-68, Sant Cugat del Vallés, 08174 Barcelona, Spain (part number FR05-SI-N-0-001). This antenna has an operating frequency range of 2400 to 2500 MHz, a peak gain of more than 2 dBi, a standing wave ratio (VSWR) less than 2:1, an impedance of 50 Ω and can operate in the range -40°C to +85°C. Frequencies of 868/915 MHz or 2.4 GHz may also be used.

The electrical connections between the components are not shown in the Figures 3 to 6. Air passages, not shown in the figures, may be provided between the components to aid cooling.

The ground sensor 10 may be taken apart to allow components to be renewed, such as the battery 160. For example, the collar 106 may couple to the elongate body 100 via a screw thread. The collar 106 and cap 108 may then be unscrewed to allow access to the interior of the elongate body 100. Where a sleeve is provided, this may be slid out from the elongate body 100. The sleeve may be split longitudinally to allow access to the components.

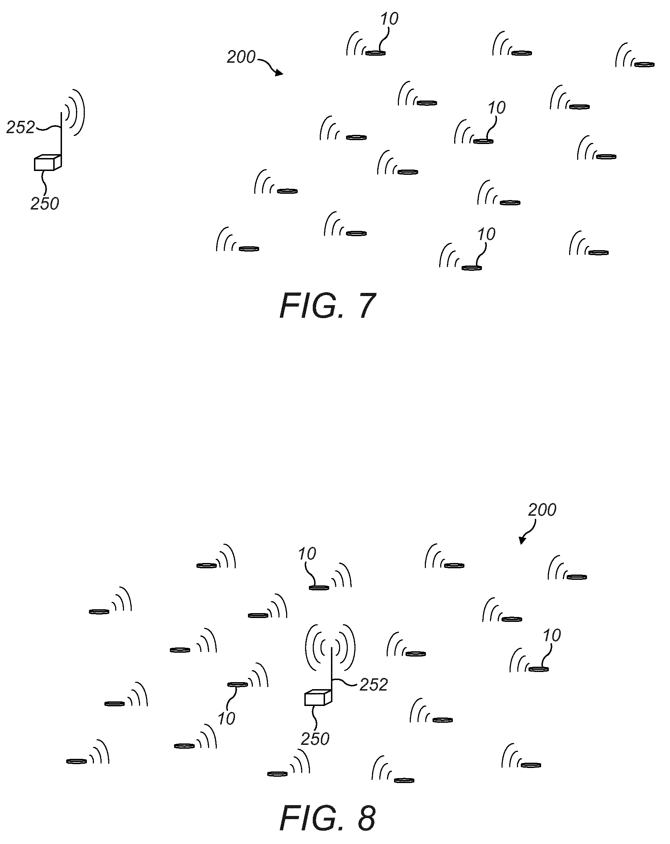

Figures 7 to 9 show a network 200 of unattended ground sensors 10. The individual ground sensors 10 may be like any of those described above. Each ground sensor 10 within the network 200 need not be the same. The ground sensors 10 are spread out to form an array. Although the figures show fifteen to twenty ground sensors 10 in a network 200, typically a network 200 would comprise a hundred or more ground sensors 10. The ground sensors communicate with a base station 250 provided with a transceiver 252. The base station 250 may be located remote from the network 200 of ground sensors 10, as shown in Figure 7. Alternatively, the base station 250 may be located within the network 200 of ground sensors 10, as shown in Figure 8.

The base station 250 receives signals from each of the ground sensors 10. The signals correspond to the data provided by the sensors 16, 40, 42 of the ground sensors 10.

As discussed above, it is preferred for the bulk of the data analysis to be performed centrally at the base station 250. Accordingly, each ground sensor 10 performs only minimal processing of data received from the sensors 16, 40, 42 before transmitting the data to the base station 250.

Processors are provided at the base station 250 to analyse the incoming data. The data from each ground sensor 10 are analysed to determine occurrences where a passing pedestrian or vehicle has been detected, as is well known in the art. Such an occurrence may cause an alarm to be generated. Further analysis may be able to characterise the occurrence, for example the movement of a pedestrian will provide a different signature to movement of a vehicle. Similarly, movement of heavy and light vehicles provide different signatures, as do wheeled vehicles compared to tracked vehicles.

Data from several sensors may be fused, for example to allow determination of the position of a moving object through triangulation, for example. Moreover, an object may be tracked, either merely by following the occurrences as they are detected by one ground sensor 10, followed by the next ground sensor 10, and so on, or by determining successive positions of the object using multiple ground sensors 10 as described above. Fusing data from multiple ground sensors 10 also allows more reliable detection of events, i.e. allows better discrimination of false alarms. The ability to fuse data is an inherent advantage of the network arrangement described herein where data processing is handled centrally at the base station 250 rather than pushing processing out to more sophisticated ground sensors 10.

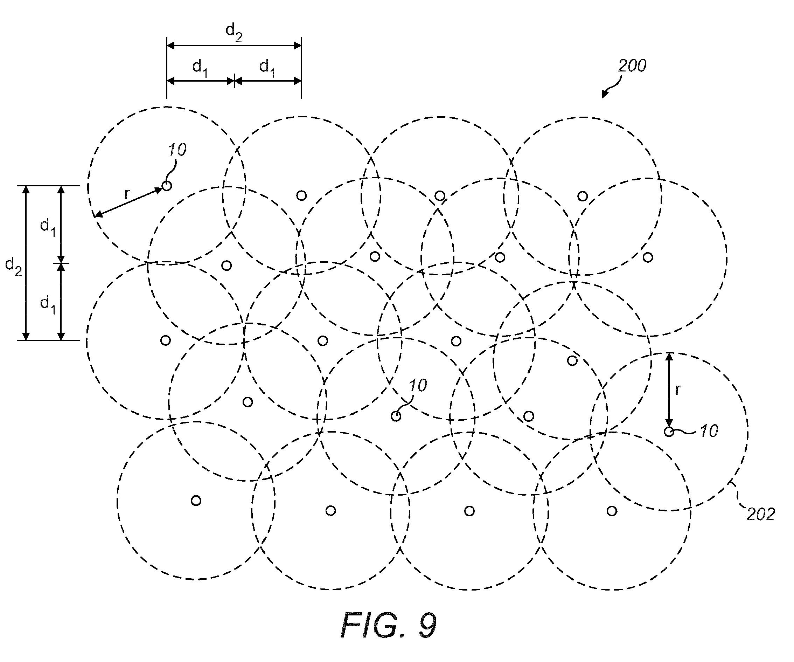

Figure 9 shows an example of how the ground sensors 10 may be positioned within part of a network 200. The ground sensors 10 need not be precisely positioned, as shown in Figure 9. This conforms with the desire to provide a simple network of sensors that may be rapidly deployed. Thus, operators may simply distribute the ground sensors 10 quickly so that they adopt approximate spacings and such that best use can be made of the landscape (e.g. to avoid trees or hard, impenetrable ground).

As shown in Figure 9, the ground sensors 10 are placed to adopt an approximate array of rows and columns. The ground sensors 10 of any row (and column) are placed approximately midway between adjacent ground sensors 10 in the neighbouring rows (or columns) to form a staggered pattern.

In the example of Figure 9, each ground sensor 10 has a nominal range r of 15 m thereby providing an effective area of coverage as shown by the dashed circles 202. By nominal range, it is meant that the ground sensors have been found reliable to detect passing vehicles within 15 m of the detector. Of course, the precise range is a function of the ground in which they are sited and the success rate of identifying movements decays with distance from the ground sensor. Put simply, the ground sensors 10 of Figure 9 are assumed to be reliable to detect moving vehicles within 15 m of the sensor 10, and are reliable to detect moving pedestrians within 10 m of the sensor 10.

The spacing d₁ between adjacent rows and columns of ground sensors 10 is set to be approximately 7.5 m. Thus, there is a spacing d₂ of 15 m between ground sensors 10 in every other row or column. Such an arrangement provides strong overlap between the areas of coverage 202. The spacings may be varied, for example to make a more dense network 200 to allow more accurate positioning through triangulation. Where triangulation is not required, a less dense configuration may be adopted as the need for overlap in the areas of coverage 202 is less. Spacings may also be varied with respect to the environment. For example, a denser spacing may be used at and around paths and roads where traffic us expected to be more likely.

## Claims

1. An unattended ground sensor (10) comprising:
a seismic sensor (16) operable to detect seismic waves incident upon the ground sensor (10) and to generate seismic data therefrom;
a transmitter (12) operable to transmit wirelessly signals from the ground sensor (10);
a controller (14) operable to receive signals from the seismic sensor (16) corresponding to the seismic data and to send signals to the transmitter for onward transmission;
a power supply (18) arranged to provide power to the ground sensor (10); and
an elongate outer body (100) within which the seismic sensor (16), the controller (14) and the power supply (18) are housed, the elongate outer body (100) has a shape that tapers to an end;
the elongate body (100) comprises a generally cylindrical main section (102) having a hollow centre with a constant internal diameter; **characterized in that**:
the unattended ground sensor (10) further comprises a shaped sleeve (140) inserted in the hollow centre wherein the sleeve (140) has an outer diameter that matches the internal diameter of the elongate body (100) to ensure a snug fit, and an internal diameter that varies to match the sizes of the seismic sensor (16), the controller (14) and the power supply (18); and
the sleeve (140) is configured to be slid out from the elongate body.

2. The ground sensor (10) of claim 1, wherein the sleeve (140) houses the seismic sensor (16), the controller (14) and the power supply (18) in a stack one above the other and wherein:
the seismic sensor (16) is a geophone (150) provided at the bottom of the stack and firmly supported by the sleeve (140), and wherein the snug fit of the sleeve (140) within the elongate body (100) ensures strong coupling of seismic waves from the ground (200) to the geophone (150);
the power supply (18) is a battery (160) located above the geophone (150);
the controller (14) is provided by a controller board (170) located above the battery (160); and further comprising:
a radio board (180) located above the controller board (170) and sandwiched between the controller board (170) and an antenna (190) and configured to convert the signals provided by the controller (14) into a form suitable for radio transmission and to provide this as a driving signal to the antenna (190).

3. The ground sensor (10) of claim 1 or 2 wherein the sleeve (140) is adapted to be split longitudinally to allow access to the seismic sensor (16), the controller (14) and the power supply (18).

4. The ground sensor (10) of claim 3 wherein:
the elongated body (100) has a generally circular cross-section;
the main section (102) extends between a pointed base (104) and a collar (106); and wherein
the ground sensor (10) further comprises:
a solid cap (108) supported above the collar (106) by legs (110) wherein the cap (108) provides protection for the seismic sensor (16), the controller (14) and the power supply (18); and
an air passage (120) extending between the collar (106), cap (108) and legs (110) configured to communicate with an aperture (122) provided in the top of the collar (106) to allow air to pass into the interior of the elongate body (100).

5. The ground sensor (10) of claim 4 wherein the collar (106) is coupled to the elongate body (100) via a screw thread configured such that the collar (106) and cap (108) can be unscrewed in order to allow access to the interior of the elongate body (100).

6. A method of renewing a component of a ground sensor (10) according to claim 3 comprising:
sliding the sleeve (140) out of the elongate body (100); and
splitting the sleeve (140) longitudinally in order to allow access to the components.

7. A method of claim 6 of renewing a component of a ground sensor (10) according to claim 5 comprising:
unscrewing the collar (106) and cap (108) from the elongate body (100) of the ground sensor (10) in order to allow access to the interior of the elongate body (100);
sliding the sleeve (140) out of the elongate body (100); and
splitting the sleeve (140) longitudinally in order to allow access to the components.

## Patentansprüche

1. Automatischer Bodensensor (10), der aufweist:
einen seismischen Sensor (16), der zum Erfassen von seismischen Wellen, die auf den Bodensensor (10) auftreffen, und zum Erzeugen von seismischen Daten daraus betrieben werden kann, einen Sender (12), der zur Funkübertragung von Signalen aus dem Bodensensor (10) betrieben werden kann,
eine Steuerung (14), die zum Empfangen von den seismischen Daten entsprechenden Signalen aus dem seismischen Sensor (16) und zum Senden von Signalen an den Sender zur Weiterübertragung betrieben werden kann,
eine Stromversorgung (18), die zur Versorgung des Bodensensors (10) mit Strom ausgebildet ist, und
ein längliches Außengehäuse (100), innerhalb dessen der seismische Sensor (16), die Steuerung (14) und die Stromversorgung (18) aufgenommen sind, wobei das längliche Gehäuse eine Form aufweist, die sich an einem Ende verjüngt,
wobei das längliche Gehäuse (100) einen generell zylindrischen Hauptabschnitt (102) aufweist, der ein hohles Zentrum mit einem konstanten Innendurchmesser besitzt,
**dadurch gekennzeichnet, dass**
der automatische Bodensensor (10) ferner eine in das hohle Zentrum eingesetzte Formhülse (140) aufweist, wobei die Hülse (140) einen Außendurchmesser, der zum Sicherstellen eines Passsitzes dem Innendurchmesser des länglichen Gehäuses (100) entspricht, und einen Innendurchmesser besitzt, der variiert, um den Größen von seismischem Sensor (16), Steuerung (16) und Stromversorgung (18) zu entsprechen, und
die Hülse (140) so ausgebildet ist, dass sie aus dem länglichen Gehäuse herausgleiten kann.

2. Bodensensor (10) nach Anspruch 1, wobei der seismische Sensor (16), die Steuerung (14) und die Stromversorgung (18) in der Hülse (140) übereinandergestapelt aufgenommen sind und wobei:
der seismische Sensor (16) ein zuunterst im Stapel angeordnetes und in der Hülse (140) fest gelagertes Geophon (150) ist, und
wobei der Passsitz der Hülse (140) in dem länglichen Gehäuse (100) eine starke Kopplung der seismischen Wellen vom Boden (200) zum Geophon (150) sicherstellt,
die Stromversorgung (18) eine Batterie (160) ist, die oberhalb des Geophons (150) angeordnet ist,
eine Steuerungsplatine (170), die sich oberhalb der Batterie (160) befindet, die Steuerung (14) bereitgestellt, und der ferner aufweist:
eine Funkplatine (180), die sich oberhalb der Steuerungsplatine (170) und zwischen der Steuerungsplatine (170) und einer Antenne (190) angeordnet und dazu ausgebildet ist, die von der Steuerung (14) abgegebenen Signale in eine zur Funkübertragung geeignete Form umzuwandeln und diese als Ansteuersignal an die Antenne (190) zu speisen.

3. Bodensensor (10) nach Anspruch 1 oder 2, wobei die Hülse (140) so ausgebildet ist, dass sie der Länge nach geteilt werden kann, um einen Zugang zu dem seismischen Sensor (16), der Steuerung (14) und der Stromversorgung (18) zu ermöglichen.

4. Bodensensor (10) nach Anspruch 3, wobei:
das längliche Gehäuse (100) einen generell kreisförmigen Querschnitt aufweist,
der Hauptabschnitt (102) sich zwischen einer spitz zulaufenden Basis (104) und einer Manschette (106) erstreckt, und wobei der Bodensensor (10) ferner aufweist:
einen massiven Deckel (108), der oberhalb der Manschette (106) von Beinen (110) getragen ist, wobei der Deckel (108) den seismischen Sensor (16), die Steuerung (14) und die Stromversorgung (18) schützt, und
eine Luftpassage (120), die sich zwischen Manschette (106), Dekkel (108) und Beinen (110) erstreckt und zur Verbindung mit einer in der Oberseite der Manschette (106) ausgebildeten Öffnung (122) ausgebildet ist, damit Luft in das Innere des länglichen Gehäuses (100) gelangen kann.

5. Bodensensor (10) nach Anspruch 4, wobei die Manschette (106) mit dem länglichen Gehäuse (100) über ein Schraubgewinde verbunden ist, das so ausgebildet ist, dass die Manschette (106) und der Deckel (108) abgeschraubt werden können, um einen Zugang in das Innere des länglichen Gehäuses (100) zu ermöglichen.

6. Verfahren zum Erneuern einer Komponente eines Bodensensors (10) nach Anspruch 3, das umfasst:
Herausgleitenlassen der Hülse (140) aus dem länglichen Gehäuse (100) und
Teilen der Hülse (140) der Länge nach, um einen Zugriff auf die Komponenten zu ermöglichen.

7. Verfahren nach Anspruch 6 zum Erneuern einer Komponente eines Bodensensors (10) nach Anspruch 5, das umfasst:
Abschrauben von Manschette (106) und Deckel (108) von dem länglichen Gehäuse (100) des Bodensensors (10), um einen Zugang zum Inneren des länglichen Gehäuses (100) zu ermöglichen,
Herausgleitenlassen der Hülse (140) aus dem länglichen Gehäuse (100) und
Teilen der Hülse (140) der Länge nach, um einen Zugriff auf die Komponenten zu ermöglichen.

## Revendications

1. Capteur au sol automatique (10) qui comprend :
un capteur sismique (16) capable de détecter les ondes sismiques incidentes sur le capteur au sol (10) et de générer des données sismiques à partir de celles-ci ;
un émetteur (12) capable de transmettre des signaux sans fil depuis le capteur au sol (10) ;
un contrôleur (14) capable de recevoir des signaux de la part du capteur sismique (16), qui correspondent aux données sismiques, et d'envoyer des signaux à l'émetteur en vue d'une transmission ultérieure ;
une alimentation (18) prévue pour fournir de l'électricité au capteur au sol (10) ; et
un corps extérieur allongé (100) dans lequel se trouvent le capteur sismique (16), le contrôleur (14) et l'alimentation (18), le corps extérieur allongé (100) ayant une forme qui s'effile vers une extrémité ;
le corps allongé (100) comprend une section principale généralement cylindrique (102) qui possède un centre creux avec un diamètre interne constant ; **caractérisé en ce que** :
le capteur au sol automatique (10) comprend en outre une gaine façonnée (140) insérée dans le centre creux, la gaine (140) ayant un diamètre extérieur qui correspond au diamètre interne du corps allongé (100) afin de garantir un ajustement de qualité, et un diamètre interne qui varie afin de correspondre aux dimensions du capteur sismique (16), du contrôleur (14) et de l'alimentation (18) ; et
la gaine (140) est configurée pour être sortie par coulissement du corps allongé.

2. Capteur au sol (10) selon la revendication 1, dans lequel la gaine (140) contient le capteur sismique (16), le contrôleur (14) et l'alimentation (18), empilés les uns sur les autres, et dans lequel :
le capteur sismique (16) est un géophone (150) prévu en bas de la pile et fermement supporté par la gaine (140), et dans lequel l'ajustement de la gaine (140) dans le corps allongé (100) garantit un couplage fort entre les ondes sismiques qui proviennent du sol (200) et le géophone (150) ;
l'alimentation (18) est une batterie (160) située au-dessus du géophone (150) ;
le contrôleur (104) est muni d'une carte de contrôleur (170) située au-dessus de la batterie (160) ; et comprenant en outre :
une carte radio (180) située au-dessus de la carte de contrôleur (170) et prise en sandwich entre la carte de contrôleur (170) et une antenne (190), et configurée pour convertir les signaux fournis par le contrôleur (14) en une forme adaptée pour la transmission radio, et pour les fournir sous forme de signal d'entraînement à l'antenne (190).

3. Capteur au sol (10) selon la revendication 1 ou 2, dans lequel la gaine (140) est adaptée pour être séparée longitudinalement afin de permettre l'accès au capteur sismique (16), au contrôleur (14) et à l'alimentation (18).

4. Capteur au sol (10) selon la revendication 3, dans lequel :
le corps allongé (100) possède une section transversale généralement circulaire ;
la section principale (102) s'étend entre une base pointue (104) et un collier (106) ; et dans lequel
le capteur au sol (10) comprend en outre :
un embout solide (108) supporté au-dessus du collier (106) par des supports (110), l'embout (108) assurant la protection du capteur sismique (16), du contrôleur (14) et de l'alimentation (18) ; et
un passage d'air (120) qui s'étend entre le collier (106), l'embout (108) et les supports (110), et configuré pour communiquer avec une ouverture (122) prévue dans la partie supérieure du collier (106) afin de permettre à l'air de passer à l'intérieur du corps allongé (100).

5. Capteur au sol (10) selon la revendication 4, dans lequel le collier (106) est relié au corps allongé (100) par le biais d'un filetage de vis configuré de sorte que le collier (106) et l'embout (108) puissent être dévissés afin de permettre l'accès à l'intérieur du corps allongé (100).

6. Procédé de remplacement d'un composant d'un capteur au sol (10) selon la revendication 3, qui comprend :
le coulissement de la gaine (140) en-dehors du corps allongé (100) ; et
la séparation de la gaine (140) de manière longitudinale afin de permettre l'accès aux composants.

7. Procédé selon la revendication 6 de remplacement d'un composant d'un capteur au sol (10) selon la revendication 5, qui comprend :
le dévissage du collier (106) et de l'embout (108) du corps allongé (100) du capteur au sol (10) afin de permettre l'accès à l'intérieur du corps allongé (100) ;
le coulissement de la gaine (140) en-dehors du corps allongé (100) ; et
la séparation de la gaine (140) de manière longitudinale afin de permettre l'accès aux composants.
